# FASCICULE DE BREVET EUROPEEN

(11) **EP 1 701 994 B1**
(45) Date de publication et mention de la délivrance du brevet: **11.08.2010**
(21) Numéro de dépôt: 04805674.1
(22) Date de dépôt: 09.12.2004
(51) Int. Cl.: C08J 5/18, B32B 27/14, D06N 7/00

(54) **REACTEURS CONTENANT DES PLAQUES DE POLYMERE FLUORE RENFORCEES RESISTANTS A LA CORROSION ET LEURS PROCEDES DE FABRICATION**
KORROSIONSBESTÄNDIGE REAKTOREN MIT VERSTÄRKTEN FLUOROPOLYMERPLATTEN UND HERSTELLUNGSVERFAHREN DAFÜR
CORROSION-RESISTANT REACTORS CONTAINING REINFORCED FLUOROPOLYMER PLATES AND PRODUCTION METHODS OF SAME

(30) Priorité: 31.12.2003 FR 0315624
(43) Date de publication de la demande: 20.09.2006
(73) Titulaire: ARKEMA FRANCE, 92700 Colombes (FR)
(72) Inventeur: DEVIC, Michel, F-69110 Sainte-Foy-Les-Lyon (FR); BONNET, Philippe, F-69007 Lyon (FR); LACROIX, Eric, F-69480 Ambérieux d'Azergues (FR); PERDRIEUX, Sylvain, F-69390 Charly (FR)
(74) Mandataire: Hirsch & Associés
(86) Numéro de dépôt international: PCT/FR2004/003169
(87) Numéro de publication internationale: WO 2005/073292

(56) Documents cités:
- WO-A-99/00344
- WO-A-99/52971
- US-A- 3 962 373
- US-A- 4 504 528
- DATABASE WPI Derwent Publications Ltd., London, GB; AN 1978-20340A XP002283109 "Fabric for protection against splashes of hot substances - e.g. molten metals or chemicals, comprises carbon fibre base fabric treated with silicone resin and covered with fluorine resin e.g. PTFE" & JP 53 010799 A (IZUMI KK) 31 janvier 1978 (1978-01-31)
- PATENT ABSTRACTS OF JAPAN vol. 0092, no. 02 (M-405), 20 août 1985 (1985-08-20) & JP 60 064814 A (FUJI DENKI SOUGOU KENKYUSHO:KK; others: 01), 13 avril 1985 (1985-04-13)

## Description

### Domaine de l'invention

La présente invention se rapporte à un réacteur chimique résistant à la corrosion acide comprenant des plaques de polymère fluoré renforcées à l'une de leurs faces par des fibres de carbone, et son procédé de fabrication.

### Art antérieur et problème technique

Les réactions en milieu superacide, en particulier les réactions de fluoration en phase liquide nécessitent pour être efficaces d'utiliser un milieu réactionnel riche en HF et en SbCl₅ (ou SbClₓF_{y}) et des températures élevées (80 à 120°C). L'HF anhydre sous forme de phase liquide forme avec SbC15 un milieu superacide très corrosif. Les métaux et alliages usuels anti-corrosion comme les aciers inoxydables, les inconels, le nickel, les hastelloy, etc. n'ont pas une résistance suffisante pour réaliser un réacteur industriel.

Une solution (JP 07-233102) consiste à appliquer un revêtement en polymère fluoré à l'intérieur du réacteur en acier inox. Une autre solution (US 4166536, US 3824115) consiste à utiliser un polymère fluoré contenant des particules de substances inorganiques telles que de la silice, du graphite ou du carbone.

Cependant, l'application de ce type de revêtement à l'intérieur du réacteur soulève de nombreux problèmes techniques comme le souligne le brevet WO 99/00344:
- Les dépôts de polymères obtenus par pulvérisation et fusion de poudre de polymère sont poreux, le métal est attaqué par l'HF et le revêtement se décolle.
- Les dépôts obtenus par fusion et rotomoulage sont plus épais et étanches, mais cette technique se limite aux réacteurs de petites dimensions (<3785 litres) et, de plus, ces revêtements même épais sont encore légèrement perméables et des acides finissent par pénétrer entre la couche de polymère et la paroi en métal du réacteur et des surpressions se créent et provoquent des gonflements et des déformations importantes du revêtement en polymère fluoré.

La demande internationale WO 99/00344 décrit un procédé de préparation d'hydrofluorocarbone dans un réacteur comprenant un revêtement polyfluoré flottant et propose d'évacuer ces surpressions par le percement de petits trous dans la paroi du réacteur (0,31 cm à 1,27 cm de diamètre).

L'utilisation d'un revêtement en polymère fluoré dans un réacteur industriel n'est en outre possible à ce jour qu'à faible température (20 à 40°C) car le coefficient de dilatation des polymères fluorés est très supérieur à celui de l'acier. Aux températures nécessaires à la fluoration en phase liquide des chloroalcanes (80 à 120°C), la dilatation de l'enveloppe (liner) est très importante et provoque des désordres structurels (plis, tension, déformation, déchirures, arrachements) aggravés par la faible résistance mécanique du polymère à chaud.

Par ailleurs, les problèmes de dilatation différentielle entre le polymère et le métal dans les réacteurs qui entraînent des décollements et arrachements du revêtement sont connus. Des solutions qui utilisent des revêtements multicouches de polymères fluorés, et de résine (US 3779854) et de fibres de verre existent mais sont totalement inadaptées à la mise en oeuvre de réactions en milieu super acide tel que l'HF.

Jusqu'à maintenant donc, aucune solution satisfaisante n'a été trouvée pour réaliser des réacteurs résistants sur le plan chimique et mécanique à des milieux corrosifs superacides.

Le brevet US 4504528 décrit des structures poreuses résistantes à la corrosion chimique, comme par exemple des revêtements flottants (liner), structures qui sont à base de fibres de carbone revêtues sur au moins un coté par une suspension à base de fluoropolymères. Ce brevet se rapporte à des utilisations haute température ou atmosphère corrosives dans des joints, revêtements flottants (liner), emballages (col 3, lignes 14-22).

Le brevet US 3962373 décrit des compositions comprenant des polymères fluorés utilisés comme revêtement sur diverses structures métalliques ou textiles à base de fibres de carbone. Les surfaces des structures sont préalablement abrasées pour renforcer l'adhérence de la composition de revêtement.

### Résumé de l'invention.

L'invention a pour but de proposer un nouveau type de réacteur comprenant des plaques de polymères fluorés renforcées à l'une de leurs faces de fibres de carbone, ces plaques résistant à la fois sur le plan mécanique et chimique aux milieux corrosifs acides.

Ces plaques peuvent constituer un revêtement interne flottant dans le réacteur, ou bien faire partie intégrante de la paroi du réacteur.

L'invention se rapporte donc à :
1. Réacteur comprenant:
   - une paroi interne métallique, et
   - un revêtement flottant comprenant une pluralité de plaques de polymère fluoré renforcées, les dites plaques étant soudées entre elles bord à bord, chaque plaque comprenant à l'une de ses faces une couche de polymère fluoré, et à l'autre face une nappe de fibres de carbone, au moins une partie de la nappe de fibres de carbone étant imprégnée de polymère fluoré, les dites plaques étant soudées entre elles bord à bord, ledit revêtement flottant étant situé sur tout ou partie de la paroi interne du réacteur, la face du revêtement comprenant les fibres de carbone libres de polymère fluoré étant positionnée contre la paroi interne métallique du réacteur.
2. Réacteur selon le point 1 comprenant en outre:
   - une pluralité d'orifices dans la paroi interne, reliés à un réseau de canalisation ;
   - un dispositif de régulation de pression connecté au réseau de canalisation maintenant la pression dans l'espace entre la couche de polymère fluoré et la paroi interne inférieure à la pression régnant à l'intérieur du réacteur.
3. Réacteur comprenant une paroi interne comprenant une ou plusieurs plaques de polymère fluoré renforcées, chaque plaque comprenant à l'une de ses faces une couche de polymère fluoré, et à l'autre face une nappe de fibres de carbone, au moins une partie de la nappe de fibres de carbone étant imprégnée de polymère fluoré, ladite paroi étant renforcée par une couche en matériau composite et fibres de carbone.
4. Réacteur selon le point 3 comprenant autour de la paroi interne une enveloppe supplémentaire externe métallique non jointive.
5. Réacteur selon les points 1 à 4, dans lequel l'épaisseur imprégnée de polymère représente au moins 10% de l'épaisseur de la nappe de fibres de carbone, de préférence 10% à 90%, avantageusement de 30 à 70%.
6. Réacteur selon les points 1 à 5, dans lequel le polymère fluoré est choisi dans le groupe consistant en le polychloro-trifluoroéthylène (PCTFE), le polyfluorure de vinylidène (PVDF), les copolymères du tétrafluoroéthylène et du perfluoropropène (FEP), les copolymères du tétrafluoroéthylène et du perfluoro-propylvinyl-ether (PFA), les copolymères du tétrafluoroéthylène et de l'éthylène (ETFE), les polymères du trifluorochloroéthylène et de l'éthylène (E-CTFE) et leurs mélanges.
7. Réacteur selon les points 1 à 6, dans lequel le polymère fluoré est le copolymère de tétrafluoroéthylène et de hexafluoropropylène (FEP).
8. Réacteur selon les points 1 à 7, dans lequel la plaque a une épaisseur totale comprise entre 1 et 20 mm de préférence 2 à 5 mm.
9. Réacteur selon les points 1 à 8, dans lequel la nappe de fibres de carbone est sous la forme de nappe tissée ou non tissée, de préférence sous forme de nappe de fibres de carbone croisées.
10. Réacteur selon les points 1 à 9, dans lequel la nappe de fibres de carbone a une épaisseur comprise entre 0,1 et 10 mm de préférence 0,5 à 3 mm.
11.Réacteur selon les points 1 à 10, dans lequel la plaque comprend:
   - une couche de polymère fluoré à l'une des faces de la plaque,
   - une couche de fibres de carbone libre de polymère fluoré à l'autre face de la plaque, et
   - une couche centrale constituée de fibres de carbone imprégnées de polymère fluoré.

### Exposé détaillé de l'invention.

L'épaisseur de la plaque finale de polymère fluoré renforcée peut être de 1 à 20 mm et de préférence 2 à 5mm.

Les polymères fluorés (PF) utilisés dans l'invention sont des polymères thermoplastiques résistants aux milieux acides notamment choisis dans le groupe consistant en le polychloro-trifluoroéthylène (PCTFE),le polyfluorure de vinylidène (PVDF), les copolymères du tétrafluoroéthylène et du perfluoropropène (FEP), les copolymères du tétrafluoroéthylène et du perfluoro-propylvinyl-ether (PFA), les copolymères du tétrafluoroéthylène et de l'éthylène (ETFE), les polymères du trifluorochloroéthylène et de l'éthylène (E-CTFE)et leurs mélanges.

De préférence, le polymère fluoré utilisé est le copolymère de tétrafluoroéthylène et de hexafluoropropylène (FEP) pour ses propriétés de non diffusion de l'antimoine (Sb) dans le polymère. Le FEP utilisé présente de 10 à 15% et de préférence 12 % en poids de hexafluoropropylène.

La couche de PF assure la résistance chimique de la plaque une fois formée et permet de protéger le métal du réacteur de la corrosion grâce à son étanchéité par son action barrière.

Les fibres de carbone sont utilisées sous forme de nappes de fibres (ou tissu), en particulier tissées ou non tissées identiques à celles utilisées habituellement dans l'industrie des matériaux composites en fibres de carbone (automobile, ski, bateau).

Les fibres de carbone sont utilisées sous forme de tissage ou d'enroulement selon les techniques classiques de fabrication des composites en fibres de carbone.

De préférence, on utilise des nappes de fibres de carbone croisées.

L'épaisseur de la nappe de fibres de carbone peut être comprise entre 0,1 et 10mm, de préférence 0,5 et 3 mm. L'épaisseur choisie dépend du type d'application ultérieure de la plaque renforcée.

La nappe de fibres de carbone augmente la résistance mécanique de la couche de PF et en particulier sa résistance au fluage à chaud.

Elle permet l'accrochage ultérieur de matériau composite sur la couche de fibres de carbone libre de PF en particulier dans le cas d'un réacteur en composite comme décrit plus loin.

Le procédé de fabrication des plaques renforcées peut comprendre la mise en contact des fibres de carbone avec le polymère fluoré; la fusion d'une face de la plaque de polymère fluoré, l'application des fibres de carbone sur la face de polymère fondu; le pressage sous pression jusqu'à refroidissement du polymère.

La nappe de fibres de carbone est liée à une face de la plaque de PF par fusion du PF en contact avec la nappe et pénétration du PF fondu à travers au moins une partie de l'épaisseur de la nappe.

Selon un mode préféré de réalisation la plaque de polymère fluoré renforcée comprend:
- une couche de polymère fluoré à une face de la plaque;
- une couche de fibres de carbone libre de polymère fluoré à l'autre face de la plaque;
- une couche centrale constituée de fibres de carbone imprégnées de polymère fluoré.

La mise en oeuvre peut se faire par chauffage d'une face de la plaque de PF jusqu'à fusion d'une couche superficielle de PF, puis application de la nappe et pressage sous forte pression jusqu'à refroidissement du PF.

On peut aussi avantageusement employer les techniques de coextrusion du PF et de la nappe pendant la fabrication de la plaque de PF.

L'imprégnation de la nappe de fibres de carbone par le PF fondu peut être effectuée au moins partiellement.

L'épaisseur d'imprégnation (taux d'imprégnation) est d'au moins 10%, de préférence 10 à 90 % de l'épaisseur de la nappe ou tissu de fibres de carbone et avantageusement de 30 à 70 %.

Du fait de l'imprégnation partielle, la partie de la nappe de fibres de carbone non imprégnée peut, grâce à sa porosité, servir d'espace libre (pour les gaz) entre la paroi métallique intérieure du réacteur et la couche étanche de PF, en particulier dans le cas d'un réacteur revêtu d'un liner comme décrit plus loin.

Ainsi le taux d'imprégnation tel que définit plus haut est suffisant pour assurer la solidité de l'accrochage de la nappe sur le PF, pour assurer le renforcement mécanique de la plaque de PF dont les caractéristiques mécaniques à chaud sont trop faibles et enfin pour assurer la stabilité dimensionnelle de la plaque de PF lors de la dilatation du polymère sous l'action de la température.

Une fois formées, les plaques renforcées peuvent servir à la fabrication d'un revêtement flottant (dit liner) de réacteur.

Ce liner est réalisé avec une ou plusieurs plaques de PF renforcées de fibres de carbone à une face. Lorsque le liner est réalisé avec plusieurs plaques celles ci sont soudées bord à bord.

En utilisant le FEP on obtient un revêtement particulièrement étanche faisant obstacle en particulier à la diffusion de l'antimoine. Le FEP a aussi l'avantage d'être facile à souder à basse température.

Dans le liner selon l'invention, la nappe de fibres de carbone est très solidement liée à la plaque de PF (extrusion du PF à travers une face de la nappe de fibres de carbone). Cette armature en fibres de carbone assure la stabilité dimensionnelle de la plaque de PF constituant le liner, la dilatation du PF s'effectue seulement sur l'épaisseur de la plaque. On évite ainsi le fluage et la formation de plis lors du chauffage du milieu réactionnel dans le réacteur.

Le liner (ou revêtement flottant) est appliqué à l'intérieur du réacteur ou sur seulement la partie du réacteur en contact avec le milieu corrosif (phase liquide), avantageusement le liner n'est appliqué que sur la cuve du réacteur.

La couche poreuse en tissu de fibres de carbone sur la face externe de la plaque de PF crée un espace perméable aux gaz. Cette couche poreuse améliore la répartition de la pression entre la paroi métallique du réacteur et le liner et évite ainsi la formation de poches de gaz résultant de la diffusion de réactifs à travers la couche barrière de polymère fluoré.

Cet espace permet de collecter l'HF gazeux qui peut diffuser très légèrement à travers le PF sous l'action des hautes pressions de la réaction de fluoration (10 à 15 bars).

Cet espace créé par la couche poreuse permet également au gaz de circuler jusqu'aux orifices percés dans la paroi métallique du réacteur, lorsque de tels orifices sont présents.

Ces orifices sont reliés à un réseau de canalisations permettant éventuellement de contrôler la pression régnant dans cet espace et de la maintenir toujours inférieure à celle qui règne dans le réacteur. Le liner est ainsi toujours plaqué fortement contre la paroi du réacteur sous l'effet de la pression sans utilisation de colles qui ne résistent pas à la diffusion de l'HF; il est de plus ainsi facilement démontable.

Pour ce faire, le réacteur peut comporter un dispositif permettant de maintenir une pression inférieure à la pression du réacteur dans l'espace compris entre la paroi intérieure en métal du réacteur et la paroi externe armée de fibres de carbone du PF du liner.

Les canalisations aboutissent à un réservoir dont la pression est maintenue à une valeur toujours inférieure à celle du réacteur au moyen d'une pompe à vide (réacteur à pression atmosphérique) ou bien d'injection de gaz inerte. Cette différence de pression peut être de 0,1 à 15 bar et de préférence 0,5 à 2 bar.

Le diamètre des orifices peut être de 1 à 20 mm et une grille peut être placée du côté de l'orifice en contact avec le liner. Le diamètre de cette grille est avantageusement supérieur à celui de l'orifice.

Le nombre d'orifices percés dans la paroi du réacteur dépend du diamètre de ces orifices et de l'épaisseur de la nappe de fibres de carbone non imprégnée par le PF. Il peut être de 1 à 20 par m² de paroi et de préférence de 2 à 5 par m².

La présence de cette couche poreuse permet aussi de réduire le nombre de trous nécessaires à l'évacuation des gaz sans diminuer l'efficacité de l'accrochage du liner sur la paroi métallique du réacteur sous l'action de la pression interne du réacteur.

Les réacteurs revêtus d'un liner tel que décrit ci-dessus sont capables de supporter des conditions de réactions en milieu super acide, en particulier les réactions de fluoration en phase liquide, telles que des températures allant de 0 à 150°C et de préférence 60 à 120°C et une pression de 1 à 15 bar absolus.

Selon un autre aspect, l'invention se rapporte à un réacteur (dit réacteur composite) dont la paroi comprend une couche interne de polymère fluoré, une couche centrale constituée de fibres de carbone imprégnées de polymère fluoré et une couche de fibres de carbone libre de polymère fluoré et imprégnée de matériau composite (dite couche composite en fibres de carbone)

Le matériau composite utilisé est de préférence une résine choisie parmi les résines compatibles avec les milieux (super) acides et en particulier l'HF. On peut utiliser en particulier le polysulfure de phénylène (PPS) et le polyétheréthercétone (PEEK).

Les fibres de carbone sont sous forme de nappes ou de tissus ou de fils.

Cette couche composite en fibres de carbone assure en particulier la résistance mécanique du réacteur, du réservoir ou des éléments de tuyauterie.

Son épaisseur est calculée en fonction des contraintes et en particulier de la pression d'utilisation du réacteur. Son épaisseur peut aller de quelques millimètres à plusieurs centimètres.

Dans ce mode de réalisation les liaisons des couches actuelles sont les suivantes:
- la couche de composite est liée à la nappe de fibres de carbone (couche centrale) par la résine au niveau de la face libre de PF de la nappe;
- la couche centrale de la nappe de fibres de carbone est liée à la couche de PF par fusion du PF en contact avec cette nappe et pénétration du PF fondu à travers une partie de la nappe de fibres de carbone.

L'enrobage de la nappe de fibres de carbone par le PF est partiel seulement de façon que la surface de la nappe de fibres carbone en contact avec la couche de composite ne soit pas recouverte de PF et que l'accrochage du composite sur la nappe puisse s'effectuer par la résine.

Ces réacteurs composites peuvent être fabriqués selon le procédé dans lequel:
- dans une première étape, on réalise des plaques de PF renforcée par une nappe de fibres de carbone avec une face de la nappe libre de PF;
- la couche centrale de la nappe de fibres de carbone est liée à la couche de PF par fusion du PF en contact avec cette nappe et pénétration du PF fondu à travers une partie de la nappe de fibres de carbone. L'épaisseur de cette plaque de PF est de préférence de 2 à 5 mm et celle de la nappe de fibres de carbone de 0,5 à 3 mm ;
- Comme précédemment la nappe de fibres de carbone est fixée sur le PF au moment de l'extrusion de la plaque et la nappe est enrobée par le PF fondu sur une partie de son épaisseur ;
- dans une seconde étape une ou plusieurs de ces plaques sont alors découpées et appliquées sur une forme ayant les dimensions intérieures du réacteur, la face en PF contre la forme, puis éventuellement soudées entre elles bord à bord par un jet de gaz chaud;
- dans une troisième étape, la couche en composite est alors mise en place par applications successives de matériau composite et de fibres de carbone autour de la forme revêtue de plaques de PF renforcée ;
- puis après séchage et polymérisation, la forme intérieure est démontée pour dégager la paroi interne du réacteur composite.

Le réacteur en composite selon l'invention permet de limiter voire supprimer les problèmes de dilatation différentielle entre le polymère et le métal, évitant ainsi des décollements et arrachements du revêtement.

Selon un mode de réalisation particulier, lorsque les réacteurs, les réservoirs ou les éléments de tuyauterie sont utilisés sous des pressions élevées, une enveloppe métallique supplémentaire par exemple en acier peut être ajoutée autour du réacteur en composite.

Cette enveloppe n'est pas jointive, un espace de quelques centimètres est prévu pour permettre la dilatation du réacteur en composite. L'enveloppe en acier est dimensionnée pour résister à la pression du réacteur en cas de fuite ou de rupture du réacteur en composite.

Un dispositif de détection de fuite peut être ajouté pour détecter la présence de produits chimiques dans l'espace libre entre le réacteur en composite et l'enceinte métallique.

Lorsque l'on utilise le FEP comme polymère fluoré dans la fabrication des plaques renforcées, ses principaux défauts, c'est à dire un ramollissement et une dilatation trop importants à chaud, sont surmontés.

Ainsi l'emploi du FEP permet de réaliser un revêtement de réacteur (ou de réservoir ou bien d'élément de tuyauterie) efficace particulièrement pour la mise en oeuvre des réactions de fluoration des chloroalcanes en phase liquide, sous pression et à chaud.

Les réacteurs ainsi fabriqués avec les plaques renforcées selon l'invention sont capables de supporter des conditions de réactions en milieu super acide, en particulier les réactions de fluoration en phase liquide, telles que des températures allant de 0 à 150°C et de préférence 60 à 120°C et une pression de 1 à 15 bar absolus.

Les plaques utilisées dans les réacteurs selon l'invention permettent de réaliser des revêtements flottants (liner) de réacteurs métalliques ou bien des réacteurs, des réservoirs ou des éléments de tuyauterie en matériau composites utilisés pour la mise en réaction, le stockage ou le transport de produits acides corrosifs, en particulier les mélanges d'acide fluorhydrique et d'halogénure d'antimoine.

Les conditions d'utilisation des réacteurs, réservoirs ou éléments de tuyauterie comprennent des températures de 0 à 150°C et des pressions de 0 à 15 bar.

### Exemples

Les exemples suivants illustrent la présente invention sans la limiter.

### Exemple 1

### Préparation d'un réacteur à revêtement flottant (liner).

Les plaques préparées comme décrit ci-après, de taille d'environ 3m² sont découpées et appliquées à l'intérieur de la cuve du réacteur, la face revêtue de tissu de fibres de carbone contre la paroi métallique. Les plaques découpées sont soudées entre elles bord à bord par un jet de gaz chaud pour former un revêtement continu étanche sur toute la surface intérieure de la cuve du réacteur y compris sur la partie de la cuve en contact avec le joint du couvercle du réacteur.

La découpe des plaques est effectuée de telle sorte que les soudures des plaques soient préférentiellement situées sur des surfaces à grand rayon de courbure.

### Préparation des plaques de polymère fluoré renforcées.

On réalise des plaques de FEP revêtues sur une face de tissu de fibres de carbone.(nappe de fibres de carbone tissées)

L'épaisseur de la plaque de FEP est de 3 mm et celle du tissu de carbone de 1 mm.

Le tissu de carbone est fixé sur la plaque de FEP au moment de l'extrusion du FEP et le tissu est enrobé par le FEP fondu sur environ la moitié de son épaisseur.

L'épaisseur totale de la plaque est de 3,3 mm.

### Exemple 2

### Préparation du réacteur composite.

Les plaques préparées comme décrit à l'exemple 1, de taille d'environ 3m², sont découpées et appliquées sur une forme ayant les dimensions intérieures du réacteur, la face en FEP contre la forme, puis soudées entre elles bord à bord par un jet de gaz chaud.

La couche en composite est alors mise en place par des applications successives de résine et de tissu de fibres de carbone autour de la forme.

Après séchage et polymérisation, la forme intérieure est démontée.

### Exemple 3

### Essais de résistance en milieu super acide d'une plaque utilisée dans les réacteurs des exemples 1 et 2.

Un échantillon de plaque de FEP revêtu de tissu de fibres de carbone de dimension 2cm x 2cm x 3,3mm tel qu'utilisée dans les réacteurs des exemples 1 et 2, est placé pendant 400 h dans un réacteur utilisé pour des réactions de fluoration en phase liquide selon les conditions suivantes:
Température : 80 à 110°CPression : 10 à 13 bar
Milieu de fluoration : mélange d'HF anhydre et de SbCl₅ Réactifs soumis à la fluoration : trichloréthylène, dichlorométhane et trichloroéthane.

A l'issue de ces essais on ne constate aucune altération de l'échantillon, ni décollement de la couche de fibres de carbone, ni aucune perte de poids.

## Revendications

1. Réacteur comprenant:
- une paroi interne métallique, et
- un revêtement flottant comprenant une pluralité de plaques de polymère fluoré renforcées, les dites plaques étant soudées entre elles bord à bord, chaque plaque comprenant à l'une de ses faces une couche de polymère fluoré, et à l'autre face une nappe de fibres de carbone, au moins une partie de la nappe de fibres de carbone étant imprégnée de polymère fluoré, les dites plaques étant soudées entre elles bord à bord, ledit revêtement flottant étant situé sur tout ou partie de la paroi interne du réacteur, la face du revêtement comprenant les fibres de carbone libres de polymère fluoré étant positionnée contre la paroi interne métallique du réacteur.

2. Réacteur selon la revendication 1 comprenant en outre:
- une pluralité d'orifices dans la paroi interne, reliés à un réseau de canalisation ;
- un dispositif de régulation de pression connecté au réseau de canalisation maintenant la pression dans l'espace entre la couche de polymère fluoré et la paroi interne inférieure à la pression régnant à l'intérieur du réacteur.

3. Réacteur comprenant une paroi interne comprenant une ou plusieurs plaques de polymère fluoré renforcées, chaque plaque comprenant à l'une de ses faces une couche de polymère fluoré, et à l'autre face une nappe de fibres de carbone, au moins une partie de la nappe de fibres de carbone étant imprégnée de polymère fluoré, ladite paroi étant renforcée par une couche en matériau composite résine et fibres de carbone,

4. Réacteur selon la revendication 3 comprenant autour de la paroi interne une enveloppe supplémentaire externe métallique non jointive.

5. Réacteur selon l'une des revendications 1 à 4 dans lequel l'épaisseur imprégnée de polymère de chaque plaque représente au moins 10% de l'épaisseur de la nappe de fibres de carbone, de préférence 10% à 90%, avantageusement de 30 à 70%.

6. Réacteur selon l'une des revendications 1 à 5, dans lequel le polymère fluoré est choisi dans le groupe consistant en le polychloro-trifluoroéthylène (PCTFE), le polyfluorure de vinylidène (PVDF), les copolymères du tétrafluoroéthylène et du perfluoropropène (FEP), les copolymères du tétrafluoroéthylène et du perfluoro-propylvinyl-ether (PFA), les copolymères du tétrafluoroéthylène et de l'éthylène (ETFE), les polymères du trifluorochloroéthylène et de l'éthylène (E-CTFE) et leurs mélanges.

7. Réacteur selon l'une des revendications 1 à 6 dans lequel le polymère fluoré est le copolymère de tétrafluoroéthylène et de hexafluoropropylène (FEP).

8. Réacteur selon l'une des revendications 1 à 7 dans lequel la plaque a une épaisseur totale comprise entre 1 et 20 mm de préférence 2 à 5 mm.

9. Réacteur selon l'une des revendications 1 à 8 dans lequel la nappe de fibres de carbone est sous la forme de nappe tissée ou non tissée, de préférence sous forme de nappe de fibres de carbone croisées.

10. Réacteur selon l'une des revendications 1 à 9 dans lequel la nappe de fibres de carbone a une épaisseur comprise entre 0,1 et 10 mm de préférence 0,5 à 3 mm.

11. Réacteur selon l'une des revendications 1 à 10 dans lequel la plaque comprend:
- une couche de polymère fluoré à l'une des faces de la plaque,
- une couche de fibres de carbone libre de polymère fluoré à l'autre face de la plaque, et
- une couche centrale constituée de fibres de carbone imprégnées de polymère fluoré.

12. Procédé de fabrication d'un réacteur selon l'une des revendications 1, 2, 5 à 11 muni d'un revêtement flottant:
- la fourniture d'au moins une plaque de polymère fluoré renforcée comprenant à l'une de ses faces une couche de polymère fluoré, et à l'autre face une nappe de fibres de carbone, au moins une partie de la nappe de fibres de carbone étant imprégnée de polymère fluoré;
- la découpe et la mise en forme de cette plaque à l'intérieur d'un réacteur métallique, la face revêtue de tissu de fibres de carbone étant au contact de la paroi métallique du réacteur;
- éventuellement, la soudure bord à bord des découpes de ladite au moins une plaque.

13. Procédé de fabrication d'un réacteur selon l'une des revendications 3, 4, 5 à 11 comprenant:
- la fourniture d'au moins une plaque de polymère fluoré renforcée comprenant à l'une de ses faces une couche de polymère fluoré, et à l'autre face une nappe de fibres de carbone, au moins une partie de la nappe de fibres de carbone étant imprégnée de polymère fluoré;
- la découpe et la mise en forme de cette plaque sur une forme, la face en polymère fluoré étant au contact de la forme;
- éventuellement, la soudure bord à bord des découpes de ladite au moins une plaque;
- l'application d'au moins une couche de matériau composite et de fibres de carbone sur ladite face libre, puis polymérisation du matériau composite.

14. Procédé selon l'une des revendications 12 ou 13 dans lequel la plaque est telle que défini dans les revendications 5 à

## Claims

1. A reactor comprising:
- an inner metal wall, and
- a floating lining comprising a plurality of reinforced fluoropolymer plates, said plates being butt-welded together, each plate comprising a layer of fluoropolymer on one of its faces, and a sheet of carbon fibers on the other face, at least part of the sheet of carbon fibers being impregnated with fluoropolymer, said plates being butt-welded together, said floating lining being situated on all or part of the inner wall of the reactor, the face of the lining comprising carbon fibers free from fluoropolymer being positioned against the inner metal wall of the reactor.

2. The reactor as claimed in claim 1, additionally comprising:
- a plurality of orifices in the inner wall, connected to a network of pipes;
- a pressure-regulating device connected to the network of pipes maintaining the pressure inside the space between the fluoropolymer layer and the lower inner wall at the pressure existing inside the reactor.

3. A reactor comprising an inner wall, comprising one or more reinforced fluoropolymer plates, each plate comprising a layer of fluoropolymer on one of its faces, and a sheet of carbon fibers on the other face, at least part of the sheet of carbon fibers being impregnated with fluoropolymer, wherein said inner wall is reinforced with a layer made of composite resin material and carbon fibers.

4. The reactor as claimed in claim 3 comprising, around the inner wall, an additional, noncontiguous outer metal jacket.

5. The reactor as claimed in one of claims 1 to 4 in which the polymer-impregnated thickness represents at least 10% of the thickness of the sheet of carbon fibers, preferably 10% to 90%, advantageously 30 to 70%.

6. The reactor as claimed in one of claims 1 to 5, in which the fluoropolymer is chosen from the group consisting of polychlorotrifluoroethylene (PCTFE), polyvinylidene fluoride (PVDF), copolymers of tetrafluoroethylene and perfluoropropene (FEP), copolymers of tetrafluoroethylene and perfluoropropylvinylether (PFA), copolymers of tetrafluoroethylene and ethylene (ETFE), polymers of trifluorochloroethylene and ethylene (E-CTFE) and blends thereof.

7. The reactor as claimed in one of claims 1 to 6, in which the fluoropolymer is the copolymer of tetrafluoroethylene and hexafluoropropylene (FEP).

8. The reactor as claimed in one of claims 1 to 7, in which the total thickness lies between 1 and 20 mm, preferably 2 to 5 mm.

9. The reactor as claimed in one of claims 1 to 8, in which the sheet of carbon fibers is in the form of a woven or non-woven sheet, preferably in the form of a sheet of crossed carbon fibers.

10. The reactor as claimed in one of claims 1 to 9, in which the sheet of carbon fibers has a thickness of between 0.1 and 10 mm, preferably 0.5 to 3 mm.

11. The reactor as claimed in one of claims 1 to 10, comprising:
- a layer of fluoropolymer on one of the faces of the plate,
- a layer of carbon fibers free from fluoropolymer on the other face of the plate, and
- a central layer consisting of carbon fibers impregnated with fluoropolymer.

12. A method for producing a reactor as defined in one of claims 1, 2, 5 to 11 provided with a floating lining as claimed in claim 10, *[comprising:]*
- providing at least one reinforced fluoropolymer plate comprising a layer of fluoropolymer on one of its faces, and a sheet of carbon fibers on the other face, at least part of the sheet of carbon fibers being impregnated with fluoropolymer;
- cutting out and forming this plate inside a metal reactor, the face covered with carbon fiber fabric being in contact with the metal wall of the reactor;
- where appropriate, butt-welding the cut-outs of said at least one plate.

13. A method for producing a reactor as defined in one of claims 3, 4, 5 to 11 comprising:
- providing at least one reinforced fluoropolymer plate comprising a layer of fluoropolymer on one of its faces, and a sheet of carbon fibers on the other face, at least part of the sheet of carbon fibers being impregnated with fluoropolymer;
- cutting out and forming this plate on a former, the face made of fluoropolymer being in contact with the former;
- where appropriate, butt-welding the cut-outs of said at least one plate;
- applying at least one layer of composite material and carbon fibers to said free face, then polymerizing the composite material.

14. A method as claimed in one of claims 12 or 13, in which the plate is defined as in one of claims 5 to 11.

## Patentansprüche

1. Reaktor, umfassend:
- eine metallische Innenwand; und
- eine beweglich eingehängte Verkleidung, umfassend eine Vielzahl von verstärkten Fluorpolymerplatten, wobei die Platten miteinander Stoß an Stoß verschweißt sind, wobei jede Platte auf einer ihrer Seiten eine Fluorpolymerschicht und auf der anderen Seite eine Schicht aus Kohlenstofffasern umfasst, wobei mindestens ein Teil der Schicht aus Kohlenstofffasern mit Fluorpolymer imprägniert ist, wobei die Platten miteinander Stoß an Stoß verschweißt sind, wobei die beweglich eingehängte Verkleidung auf der Gesamtheit oder einem Teil der Innenwand des Reaktors angeordnet ist, wobei die Seite der Verkleidung, die die freien Kohlenstofffasern aus Fluorpolymer umfasst, an einer metallischen Innenwand des Reaktors positioniert ist.

2. Reaktor nach Anspruch 1, ferner umfassend:
- eine Vielzahl von Öffnungen in der Innenwand, die mit einem Kanalisationsnetz verbunden sind;
- eine Vorrichtung zur Druckregelung, die an das Kanalisationsnetz angeschlossen ist und den Druck in dem Raum zwischen der Fluorpolymerschicht und der unteren Innenwand auf dem im Inneren des Reaktors herrschenden Druck hält.

3. Reaktor, umfassend eine Innenwand, umfassend eine oder mehrere verstärkte Platten aus Fluorpolymer, wobei jede Platte auf einer ihrer Seiten eine Fluorpolymerschicht und auf der anderen Seite eine Schicht aus Kohlenstofffasern umfasst, wobei mindestens ein Teil der Schicht aus Kohlenstofffasern mit Fluorpolymer imprägniert ist, wobei die Wand durch eine Schicht aus einem Verbundstoff aus Harz und Kohlenstofffasern verstärkt ist.

4. Reaktor nach Anspruch 3, umfassend um die Innenwand eine zusätzliche äußere metallische, nicht fest verbundene Hülle.

5. Reaktor nach einem der Ansprüche 1 bis 4, bei dem die mit Polymer imprägnierte Dicke jeder Platte mindestens 10 % der Dicke der Schicht aus Kohlenstofffasern, vorzugsweise 10 bis 90 %, vorteilhafterweise 30 bis 70 %, ausmacht.

6. Reaktor nach einem der Ansprüche 1 bis 5, bei dem das Fluorpolymer in der Gruppe ausgewählt wird, bestehend aus Polychlortrifluorethylen (PCTFE), Vinylidenpolyfluorid (PVDF), den Copolymeren des Tetrafluorethylen und des Perfluorethylen und des Perfluorpropylvinylether (PFA), den Copolymeren des Tetrafluorethylen und des Ethylen (ETFE), den Polymeren des Trifluorchlorethylen und des Ethylen (E-CTFE) und ihren Gemischen.

7. Reaktor nach einem der Ansprüche 1 bis 6, bei dem das Fluorpolymer das Copolymer des Tetrafluorethylen und des Hexafluorpropylen (FEP) ist.

8. Reaktor nach einem der Ansprüche 1 bis 7, bei dem die Platte eine Gesamtdicke zwischen 1 und 20 mm und vorzugsweise 2 bis 5 mm aufweist.

9. Reaktor nach einem der Ansprüche 1 bis 8, bei dem die Schicht aus Kohlenstofffasern in Form einer Gewebeschicht oder Faservliesschicht, vorzugsweise in Form einer Schicht aus gekreuzten Kohlenstofffasern, vorhanden ist.

10. Reaktor nach einem der Ansprüche 1 bis 9, bei dem die Schicht aus Kohlenstofffasern eine Dicke zwischen 0,1 und 10 mm und vorzugsweise 0,5 bis 3 mm hat.

11. Reaktor nach einem der Ansprüche 1 bis 10, bei dem die Platte umfasst:
- eine Fluorpolymerschicht auf einer der Seiten der Platte,
- eine freie Schicht aus Kohlenstofffasern aus Fluorpolymer auf der anderen Seite der Platte, und
- eine Mittelschicht, die von mit Fluorpolymer imprägnierten Kohlenstofffasern gebildet ist.

12. Verfahren zur Herstellung eines Reaktors nach einem der Ansprüche 1, 2, 5 bis 11, der mit einer beweglich eingehängten Verkleidung versehen ist, umfassend:
- die Bereitstellung mindestens einer verstärkten Platte aus Fluorpolymer, umfassend auf einer ihrer Seiten eine Fluorpolymerschicht und auf der anderen Seite eine Schicht aus Kohlenstofffasern, wobei mindestens ein Teil der Schicht aus Kohlenstofffasern mit Fluorpolymer imprägniert ist;
- das Ausschneiden und Formen dieser Platte im Inneren eines metallischen Reaktors, wobei die mit einem Kohlenstofffasergewebe verkleidete Seite mit der metallischen Wand des Reaktors in Kontakt ist;
- eventuell das Schweißen der Ausschnitte der mindestens einen Platte Stoß an Stoß.

13. Verfahren zur Herstellung eines Reaktors nach einem der Ansprüche 3, 4, 5 bis 11, umfassend:
- die Bereitstellung mindestens einer verstärkten Platte aus Fluorpolymer, umfassend auf einer ihrer Seiten eine Fluorpolymerschicht und auf der anderen Seite eine Schicht aus Kohlenstofffasern, wobei mindestens ein Teil der Schicht aus Kohlenstofffasern mit Fluorpolymer imprägniert ist;
- das Ausschneiden und Formen dieser Platte auf einer Form, wobei die Seite aus Fluorpolymer mit der Form in Kontakt ist;
- eventuell das Stoßschweißen der Ausschnitte der mindestens einen Platte;
- das Aufbringen mindestens einer Schicht aus Verbundstoff und Kohlenstofffasern auf die freie Seite, dann die Polymerisation des Verbundstoffes.

14. Verfahren nach einem der Ansprüche 12 oder 13, bei dem die Platte wie in den Ansprüchen 5 bis 11 definiert ist.
